# EUROPEAN PATENT APPLICATION

(11) **EP 2 991 015 A1**
(43) Date of publication of application: **02.03.2016**
(21) Application number: 15181465.4
(22) Date of filing: 18.08.2015
(51) Int. Cl.: G06Q 20/18, G06Q 20/10, G06Q 20/34, G07F 19/00

(54) **DEVICE-ENABLED SERVICE HANDOFF AND COLLABORATION**

(30) Priority: 28.08.2014 US 201414471517
(71) Applicant: NCR Corporation, Duluth, Georgia 30096 (US)
(72) Inventor: SMITH, Martin, Dundee, Tayside DD2 1BF (GB); JOY, Ian, St. Andrews, Fife KY16 9YA (GB); BREEN, Ashley, Dundee, Tayside DD3 0RP (GB); ROSSMANN, Wolf, Forfar, Tayside DD8 1UN (GB)
(74) Representative: MacLeod, Roderick William

(57) **Abstract**

Various embodiments herein each include at least one of systems, devices, methods, and software for device-enabled service handoff and collaboration. One embodiment is a method that includes presenting, on a first device (018 or 109), data with regard to a transaction session initiated on a second device (102, 104, 106), the first device (108 or 109) collaborating in performance of the transaction session via a network (140). The method further includes transmitting, from the first device (108) or 109), a request for a third device (109 or 108) to collaboratively join the transaction session in response to command input received by the first device (108 or 109).

## Description

Some more modem banking outlets, such as bank branches, and retail outlets, such as stores, provide their personnel (e.g., tellers, clerks, supervisors, etc.) with a tablet device that runs an application allowing them to assist customers with a variety of transactions. An example of such a system is the NCR Interactive Banker product available from NCR Corporation of Duluth, Georgia. Such systems generally join teller and tablet terminals, customer terminals (e.g., Automated Teller Machine "ATM", Self Service Terminal "SST"), and bank branch and core banking systems to provide interactive customer service capabilities and experiences. However, to obtain assistance, customers still often need to seek out or wait for an employee with a tablet or an open employee station to obtain assistance. Further, there may be a limited number of employees with tablets, especially during peak times such as at lunchtime within an urban bank branch.

In addition, transactions customers are performing may require supervisor approval, such as for large bank withdrawals or product returns, or assistance of an employee having a certain role or skill to assist with a complex transaction, such as submitting a mortgage application or picking up a prescription that requires counseling from a pharmacist. Availability of such personnel is typically limited.

Various embodiments herein each include at least one of systems, devices, methods, and software for device-enabled service handoff and collaboration.

One embodiment is a method that includes presenting, on a first device, data with regard to a transaction session initiated on a second device, the first device collaborating in performance of the transaction session via a network. The method further includes transmitting, from the first device, a request for a third device to collaboratively join the transaction session in response to command input received by the first device.

Another embodiment is a method that includes initiating a session on an SST and receiving transaction input into the SST with regard to a transaction function attempted on the SST. The method further includes connecting, in response to the attempted transaction function, the SST to a customer assistance session through which customer service is provided to the SST by a first service provider. The method also includes connecting, within the communication session, to a second service provider and receiving an approval of the attempted transaction function on the SST, and performing the attempted transaction function.

A further embodiment provides a computing device. The computing device of such embodiments includes at least one network interface device, at least one processor, and at least one memory device. The at least one memory device stores instructions executable by the at least one processor to connect a first device and second device in a joint transaction session associated with a transaction initiated on the second device. The instructions stored on the at least one memory device are further executable within the joint transaction session to receive, from the first device via the at least one network interface device, a request for a third device to join the joint transaction session and to connect the third device to the joint transaction session in response to a received acceptance of an invitation to connect transmitted via the at least one network interface device.

According to a first aspect of the present invention there is provided a method comprising: presenting, on a first device, data with regard to a transaction session initiated on a second device; collaborating in performing the transaction session via the first device and a network; transmitting a request for a third device to collaboratively join the transaction session in response to a command input received by either the first or the second device.

The step of collaborating in performing the transaction session optionally includes: transmitting data from the first device representative of input received on the first device with regard to a transaction activity initiated on the second device.

The transaction session is optionally a banking transaction session and the data with regard to the transaction session optionally includes bank account data and data representative of a banking transaction attempt by a holder of the bank account, the attempted banking transaction needing approval from a user of the third device.

The method optionally further comprises: joining the third device in collaborative performance of the transaction session, the joining including the third device gaining access to the data with regard to the transaction session including data representative of actions previously performed during the transaction session.

The method optionally further comprises: disconnecting the second device from the transaction session upon the third device joining the transaction session.

The step of collaborating in performing the transaction session optionally includes: providing audio or audio and video communication between the first and second devices, data of the audio or audio and video communication being transmitted and received via the network.

The second device is optionally a customer self-service terminal (SST), such as an automated teller machine (ATM).

The first device is optionally a mobile device, such as a cellular radio frequency telephone.

According to a second aspect of the present invention there is provided a computing device comprising: a network interface device, a processor, and a memory device, the memory device storing instructions executable by the processor to: connect a first device and second device in a joint transaction session associated with a transaction initiated on the second device; within the joint transaction session: receive, from the first device via the network interface device, a request for a third device to join the joint transaction session; and connect the third device to the joint transaction session in response to a received acceptance of an invitation to connect transmitted via the network interface device.

The instructions stored on memory device are optionally further executable by the processor to: retrieve data related to the transaction initiated on the second device; and transmit the retrieved data to the third device.

The instructions stored on the memory device are optionally further executable by the processor to: receive, via the network interface device, data from the third device representative of input received on the third device with regard to a transaction activity initiated on the second device; and transmit, via the network interface device, at least a portion of the data received from the third device to both the first and second devices.

The instructions stored on the memory device are optionally further executable by the processor to: record, on a data storage device, a record of data processing activities performed within the joint transaction session including data representative of a first, second, or third device user that initiated each data processing activity.

The recorded data processing activity is optionally an approval of a banking transaction initiated on the second device, the approval received via the network interface device from the third device.

The instructions stored on the memory device are optionally further executable by the processor to: disconnect the second device from the joint transaction session subsequent to connecting the third device to the joint transaction session.

According to a third aspect of the present invention there is provided a method comprising: initiating a session on a self-service terminal (SST); receiving transaction input into the SST with regard to a transaction function attempted on the SST; connecting, in response to the attempted transaction function, the SST to a customer assistance session through which customer service is provided to the SST by a first service provider; connecting, within the communication session, to a second service provider; receiving, on the SST, approval of the attempted transaction function; and performing the attempted transaction function.

The attempted transaction function is optionally an attempted payment tendering.

The method optionally further comprises: denying the attempted transaction function when received; presenting, via a display of the SST, an indication of the denial; and receiving input on the SST requesting customer assistance following the denial of the attempted transaction function; wherein the connecting the SST to the customer assistance session includes transmitting data within the customer assistance session representative of the attempted transaction function that was denied.

The customer assistance session optionally includes audio and video communication between the SST, the first service provider, and the second service provider, the SST simultaneously: capturing communication session video via a camera of the SST; capturing audio via a microphone of the SST; providing communication session audio via a speaker of the SST; and presenting communication session video via a display of the SST.

The first service provider is optionally disconnected from the customer service session subsequent to the SST being connected to the second service provider.

The first and second service providers are optionally computing devices of customer service personnel.

According to a fourth aspect of the present invention there is provided a method of operating a self-service terminal, the method comprising: initiating a transaction session at the self-service terminal; detecting an assistance event during the transaction session; connecting, in response to the detected assistance event, to a registered assistance device; collaborating with the registered assistance device in an attempt to complete the transaction session; and transmitting a request for a third device to join the transaction session in response to command input received by the registered assistance device.

The third device may be operated by a staff member having higher approval authority than a staff member who operates the registered assistance device.

The assistance event may be triggered by a customer of the self-service terminal or by the self-service terminal itself, for example, in the event of a transaction being denied.

These and other aspects of the present invention are presented herein, by way of example, with reference to the accompanying drawings, in which.
FIG. 1 is a logical block diagram of a system, according to an example embodiment;
FIG. 2 is a block flow diagram of a method, according to an example embodiment;
FIG. 3 is a block flow diagram of a method, according to an example embodiment; and
FIG. 4 is a block diagram of a computing device, according to an example embodiment.

Various embodiments herein each include at least one of systems, devices, methods, and software for device-enabled service handoff and collaboration. Such embodiments are provided in the context of interactive terminal services that connect SST users to customer assistance personnel within SST transactions. While a common context in which interactive terminal services are provided is within an ATM transaction session, terminal services may be provided in other contexts in some embodiments. For example, in the contexts of SST checkout stations, customer assistance kiosks, restaurant table terminals, and the like.

Interactive terminal services, in some embodiments, allow personnel to monitor activities of terminal users and to connect in interactive sessions with terminal users such as through audio or audio and video communication sessions. Interactive terminal services also allow personnel to participate in transactions such as by providing approval of certain types of transactions, provide terminal operation guidance to users, to answer questions with regard to transaction options provided on the terminal, among other activities.

Terminal services can be implemented to help customers to accept self-service options provided to them through terminals by making assistance readily, and quickly, available instead of waiting in line, such as for a teller window at a bank branch. In addition, many people prefer to handle transactions with a person. Interactive terminal services provide these people the benefits of speed in automated while also providing a readily available opportunity to interact according to their preference.

In a typical interactive terminal services deployment at a retail outlet, such as a store or a bank branch, terminals, computing devices of personnel, and core systems of the retail outlet are joined by a terminal services server. Customers interact with a terminal, such as an SST checkout station or ATM. Personnel monitor customer terminal activity on their own device, such as mobile computing device (e.g., tablet, smartphone) or a personnel station (i.e., checkout station, computer at a bank teller window or customer service desk). At any time during the transaction, the customer may select an option on the terminal to request customer assistance or customer assistance may be automatically requested based on a transaction requirement, failure, or after an idle period. A member of the personnel team, such as a bank teller, may then visit the terminal, assist the customer in person, and participate in the transaction either through the terminal or via their own computing device. In other situations, the bank teller may join and participate in the transaction via their computing device away from the terminal.

In some instances, the teller who has joined the transaction to provide assistance may be unable to complete the transaction with the customer - either because the teller lacks the expertise or authorization to resolve the customer's problem or because the teller needs to leave for some other reason such as a high priority phone call, comfort break, end of their working day, and the like. In such situations, the teller would prefer not to lose any decisions they have already made on behalf of the customer, for example, in approving some but not all checks of a multi-check deposit transaction. To allow the teller to depart the transaction without losing any effort already expended, the interactive terminal solution allows the teller to pass the transaction to another teller in the branch or at a remote location without losing any of the completed transaction decisions. In embodiments where the teller is assisting via the terminal, the transaction handoff may be initiated via a terminal user interface. In embodiments where the teller is assisting via their own computing device, the handoff may be initiated via the computing device.

The handoff to another teller or person having sufficient authority or expertise, such as a supervisor, is made in some embodiments from a presented pick-list that shows other logged on tellers and supervisors and allows the current teller to delegate the remainder of the assistance session to a selected teller or supervisor.

The tablet indication (graphical and associated audio alert) for one teller requesting hand-over to another would probably be different from the alert generated by a customer assistance request to allow the receiving teller to differentiate the two. Additionally, the new teller may be shown the identity of the teller who is requesting their help or delegating the remainder of the assistance request to them.

Similarly, some embodiments may allow the teller to select another to join the transaction as a third participant, such as to provide authorization for a banking transaction of a high value or to authorize a transaction reversal.

In either situation where a transaction is handed off or another joins the transaction, the new participant in the transaction is typically provided options to view previous activity within the transaction and other information related thereto, such as information with regard to the customer and one or more of their accounts.

These and other embodiments that allow multiple local or remote personnel to become involved in servicing assistance requests and to facilitate handoff of assistance requests between personnel are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

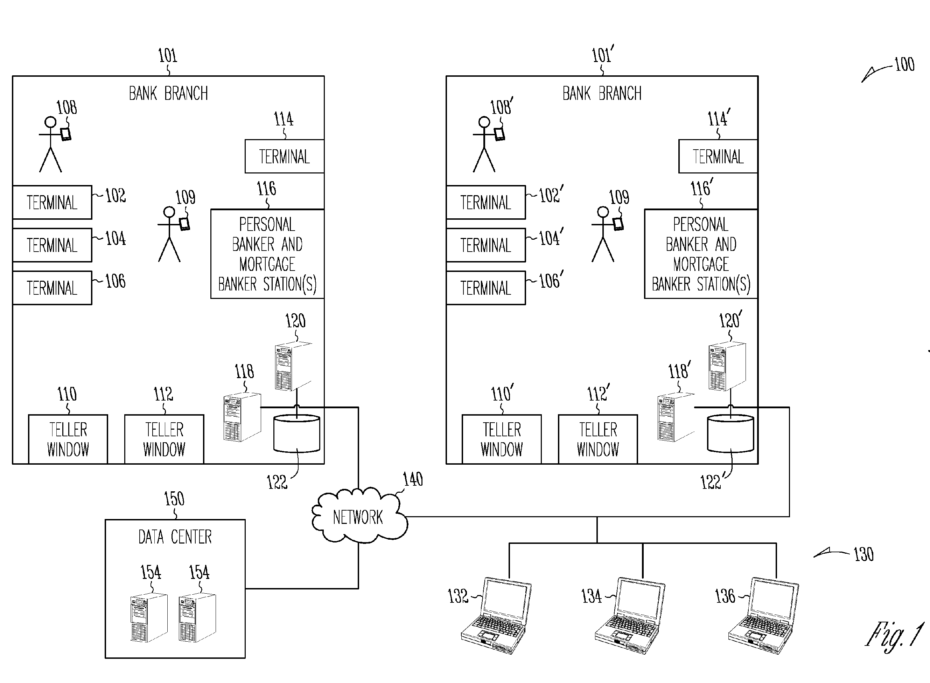

FIG. 1 is a logical block diagram of a system 100, according to an example embodiment. The system 100 is illustrated and described in a banking context, and more specifically a bank branch context. However, this is for illustration purposes only and is not intended to limit the extent of the disclosure herein as the contributions herein are applicable to other contexts, such as other retail contexts and restaurant contexts, among other contexts within which customers or other terminal users may be provided assistance in conducting terminal transactions.

The system 100, as illustrated, is deployed across a plurality of facilities that may be separated by short or long distances. The facilities include two bank branches 101, 101', although there may be many bank branches. The facilities also include one or more data centers 150 where one or more core banking systems 152 may reside and one or more customer assistance centers 130 where remote customer service personnel may provide customer assistance via phone calls, video communication sessions, and interactive terminal services. Customer assistance center 130 personnel may utilize computing devices 132, 134, 136, such as one or both of personal computers and mobile devices, to interact with terminal 102, 104, 106, 114 users. The bank branches 101, 101', one or more data centers 150, and one or more customer assistance centers 130 are connected by at least one network 140, such as the Internet, a leased network, and other networks.

As illustrated, the two bank branches 101, 101' are intended to be identical for purposes of brevity and simplicity in description by avoiding superfluous details that do not assist in understanding the subject matter herein and the subjoined claims. Further, as one would readily appreciate that although there may be differences in bank branch sizes, numbers of deployed terminals and teller windows, and numbers of employees, the elements of bank branches, at least of the same banking enterprise, are quite similar. Thus, the description of bank branch 101 is also provided as the description for bank branch 101'. Any important distinctions between the two bank branches 101, 101' are expressly described.

The bank branch 101 includes a number of terminals 102, 104, 106, 114, a number of teller windows 110, 112, and a number of personal banker and mortgage banker stations 116. The numbers of terminals 102, 104, 106, 114, teller windows 110, 112, and personal banker and mortgage banker stations 116 may vary between bank branches 101, 101'. The teller windows 110, 112 may be teller stations that do not actually include a window, for example, they may be desks or countertops behind which a teller sits or stands.

The bank branch also includes a number of mobile devices, such as tablets 108, 109, that may be provided to bank personnel, such as tellers, supervisors, and dedicated customer assistance personnel. The tablets 108, 109 wirelessly connect to a network of the bank branch 101 that may also connect to the network 140. Each of the teller windows 110, 112 and the personal banker and mortgage banker stations 116 typically include a computing device connected to the bank branch network.

The bank branch 101 may also include data processing resources, such as a local assistance server 118, a bank branch system 120, a database 122, and other data processing systems and devices. The local assistance server 118 is a set of processes that execute thereon to provide interactive terminal services on the terminals 102, 104, 106, 114, as will be discussed further below.

The bank branch system 120 operates to provide banking data processing services at the bank branch 101 and may maintain local copies or caches of select data from the core banking system 152 or daily bank branch 101 data that is uploaded to the core banking system 152 on a periodic basis. However, some bank branches may not include one or both of the local assistance server 118 and bank branch system 120 and instead access services via the network 140 of the core banking system 152 and an interactive services server 154 that may be deployed in the one or more data centers 150. In some other embodiments, the local assistance server 118 and bank branch system 120, although both being deployed to service the bank branch 101, may be individually deployed to locations remote to the bank branch 101 such as in the data center 150 or elsewhere and need not be co-located with one another. Regardless of where the local assistance server 118, bank branch system 120, and the core banking system 152 are located, each of which may be deployed singularly or in a distributed manner, each of these systems 118, 120, 152, which may also include the interactive services server 154, may be deployed individually in the same location or different locations.

In some embodiments, providing interactive terminal services relies on three elements. These elements are:
1. An Interactive terminal services application deployed to each terminal 102, 104, 106, 114;
2. Staff consoles which may be the tablets 108, 109 or computers deployed at teller windows and personal banker and mortgage banker stations; and
3. The local assistance server 118.

First, running on the each of the terminals 102, 104, 106, 114 as a part of terminal operating software or as an ancillary application or service, is the interactive terminal services application. The interactive terminal services may provide a set of services, used either directly or indirectly through other terminal software through service calls, to connect the respective terminal to one or more of a teller, customer assistance personnel, or customer assistance center 130 personnel.

Second, the staff console. The staff console is a device, such as the tablets 108, 109, that may execute a thin-client or thick-client staff console device app or application or access a browser based application to participate in interactive terminal sessions and to monitor customer terminal activity.

The third element is the local assistance server 118, which can be a Microsoft (trade mark) Windows (trade mark) server available from Microsoft Corporation of Redmond, Washington, a Linux-based server, or a server-class computing device having a different operating system. In some embodiments, a bulk of the terminal assistance software runs on this server. This is the orchestration point for other touch points. The local assistance server 118 joins the interactive terminal services application and the staff consoles to the bank branch and core banking systems 120, 152 or, in embodiments where the solution has not been integrated with the core banking systems 152, it may track transactions flowing through the bank branch network and provide a view of these on the staff consoles. Stated differently, the local assistance server 118 join teller and tablet terminals, customer terminals (e.g., Automated Teller Machine "ATM", Self Service Terminal "SST"), and bank branch and core banking systems to provide interactive customer service capabilities and experiences.

In some embodiments, one or more of the interactive terminal services applications deployed to the terminals 102, 104, 106, staff consoles such as the tablets 108, 109 and computers and other computing devices of other bank personnel, the local assistance server 118, and the interactive services server 154 may include executable software or firmware components to facilitate one or both voice and video and voice communication between customers and bank personnel. For example, some embodiments may include components of or built upon an integrated collaboration services platform. Other embodiments may include or be built upon a real-time communication platform, such as the Web Real-Time Communications (WebRTC) platform.

In operation according to some embodiments, a customer may interact with one of the terminals 102, 104, 106, 114, such as to make a deposit to a bank account via an ATM terminal. For example, the customer may approach terminal 102, authenticate with an ATM card and PIN, select a bank account, and enter details with regard to a deposit the customer desires to make. The customer may then tender items to be deposited to the ATM into an automated payment/deposit tendering device, such as by providing a check to be deposited to a check-reading device. The check-reading device images the check and the ATM, or a data processing system to which the ATM may connect, processes the check image and data read therefrom. The check processing may determine there is an issue with the check, such as that writing on the check cannot be read by the check processing system, that the check is likely to bounce, that a bank account of the check is fraudulent, or other issue. In such instances, the ATM may present the issue to the customer and the customer may request teller assistance by pressing a button on the ATM, such as a button presented on a touch screen. In some other embodiments, upon detection of the issue reading the check, the ATM or other process may automatically request assistance for the customer.

Either way that assistance is requested, the request may be presented within a user interface of each of the tablets 108, 109 in the bank branch 101. One of the tablet users, such as a user of the tablet 108 who is a teller, may accept the assistance request by selection of a control presented on the tablet by a tablet 108 app or application accessed via a web browser of the tablet 108. This will begin a customer assistance session between the tablet 108 and the ATM 102.

The teller may then visit the customer at the ATM 102 or remain in place and communicate with the customer within the customer assistance session via a voice (i.e., audio) or audio and video session established between the ATM 102 and the tablet 108. The teller may also access, via the tablet 108 within the customer assistance session, data regarding the customer, the customer's account(s), and the transaction being attempted, including an image of the check from which the issue arose. The teller may resolve the issue with the check via the tablet 108. However, the teller may not have sufficient authority or knowledge to complete or time to complete approval of the deposit.

In each of these situations, the teller may choose to transfer the customer assistance session to another bank employee having sufficient authority such as a user of the tablet 109 within the bank branch who may be one or both of a supervisor with sufficient authority and knowledgeable about the check approval process. The teller may instead choose to transfer the customer assistance session to a customer support specialist at a customer assistance center 130, such as a user of computing device 132, or an available teller or manager in another bank branch, such as bank branch 101'. In some embodiments, the choice of who will receive the customer assistance session is made by an automated process.

Regardless of who is chosen to receive the customer assistance session transfer, that user will be joined via their respective computing device (i.e., tablet 109 or computing device 132). The user will then be able to view data with regard to the customer, the customer's account(s), and the transaction in progress, including a record of actions taken by both the customer and the teller via the tablet 108. In some embodiments, once the other bank employee successfully joins the customer assistance session, the teller is disconnected. However, in some instances, rather than leaving the customer assistance session, the teller remains and the other bank employee remains only for a period needed to resolve the issue, such as to approve the deposit.

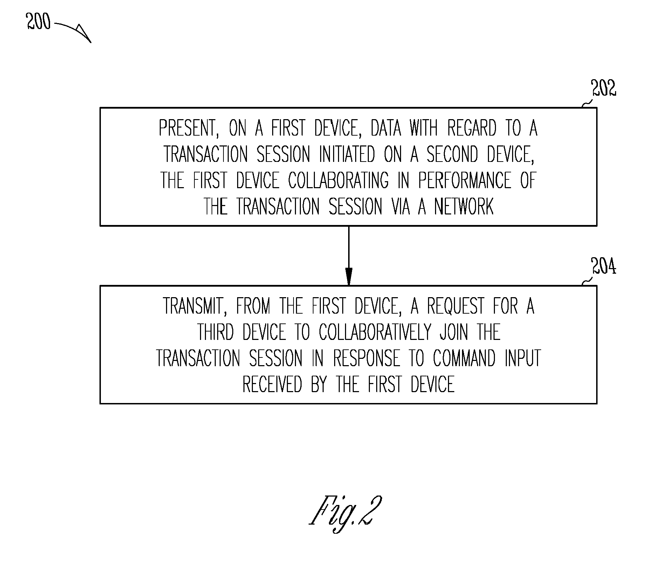

FIG. 2 is a block flow diagram of a method 200, according to an example embodiment. The method 200 is an example of a method that may be performed on an SST, such as an ATM, on a mobile device, such as a tablet or smartphone, or on another computing device, such as a personal computer. The method 200 is typically utilized by personnel of an entity that provides customer assistance via interactive terminal service, such as in a banking or retail environment.

In some embodiments, the method is performed in whole or in part by a thin or thick client app or application that executes on a mobile device of a bank teller, checkout clerk, or other tasked with providing customer assistance to terminal users. The method 200 includes presenting 202, on a first device, data with regard to a transaction session initiated on a second device, the first device collaborating in performance of the transaction session via a network. The first device, in some embodiments, may be a mobile device of such a person tasked with providing terminal users customer assistance. The second device, in some embodiments, may be a terminal, such as an ATM, SST, self-service checkout station, or other self-service terminal. The transaction-type of the method 200 may be dictated by a device-type of the second device. For example, when the second device is an ATM, the transaction of the method 200 is a banking transaction, such as a bank deposit or withdrawal, or a request to cash a check. Similarly, when the second device of a particular embodiment is a self-service checkout terminal, the transaction-type may be a product return, a purchase, a price check, a service order or request, and the like.

The method 200 further includes transmitting 204, from the first device, a request for a third device to collaboratively join the transaction session in response to command input received by the first device. The third device, in some embodiments, is a mobile device of another person tasked with providing customer service located either in the same facility as the first device, in another facility such as another bank branch or store, in a customer assistance facility such as a facility common referred to as a call center, or elsewhere.

In some embodiments of the method 200, collaborating in performance of the transaction session by the first device includes transmitting data from the first device representative of input received on the first device with regard to a transaction activity initiated on the second device.

In some embodiments when the transaction session is a banking transaction session, data retrieved, presented, and exchanged between the devices is generally banking data. Banking data may include bank account data and data representative of banking transactions. In some embodiments of the method 200, the data exchanged in a transaction session includes data representative of or associated with attempt by a holder of a bank account on the second device to perform a banking transaction that has been denied on the second device. Regardless of the reason for denial, transaction denials may be overridden or simply subject to approval by a supervisor. When the user of the first device is not a supervisor, a third device of a supervisor may be joined to the transaction session or the transaction session may be transferred, or "handed off", to the third device of the supervisor. When the third device is added to the transaction session, the third device gains access to the data with regard to the transaction session including data representative of actions previously performed during the transaction session and data identifying who performed each action.

In some embodiments of the method 200, when the third device is added, the supervisor may perform the needed task, such as providing a needed approval, and the third device may then be disconnected. However in other embodiments, or under different circumstances, subsequent to the third device being successfully added to the transaction session, the second device may be disconnected leaving the first and third devices connected to conduct the transaction session.

In some embodiments of the method 200, collaborating in performance of the transaction session includes audio or audio and video communication between two or all of the first, second, and third devices. Data of the audio or audio and video communication is typically transmitted and received via the network, although some embodiments may include peer-to-peer connections directly between participating devices.

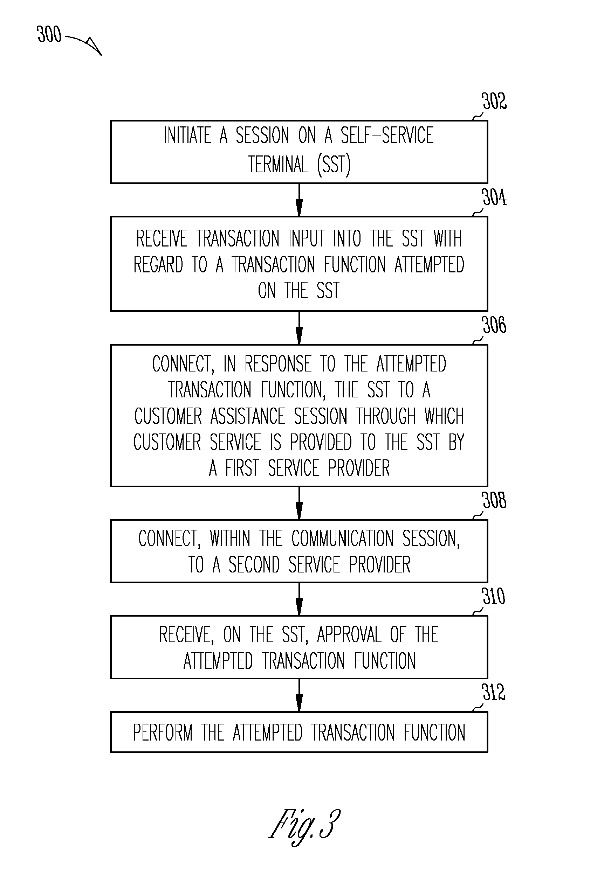

FIG. 3 is a block flow diagram of a method 300 is, according to an example embodiment. The method 300 is an example of a method that is performed on an SST, such as an ATM, a self-service checkout station, a gas pump POS terminal, and the like.

The method 300 includes initiating 302 a session on an SST, such as a banking session on an ATM or a purchase transaction on a self-service checkout station. The method 300 may then receive 304 transaction input into the SST with regard to a transaction function attempted and connect 306, in response to the attempted transaction function, the SST to a customer assistance session. Customer service is provided to the SST by a first service provider, such as a mobile device of customer assistance personnel. The method 300 further includes connecting 308, within the communication session, to a second service provider, such a mobile device of a supervisor. In some embodiments, the first service provider is disconnected from the customer service session subsequent to the SST being connected to the second service provider.

In some embodiments, the method 300 also includes receiving 310, on the SST, approval of the attempted transaction function. The approval in such embodiments is received in a data transmission in response to an approval command being received by the second service provider. The method 300 may then continue by performing the attempted transaction function, such as on the SST or by transmitting a command or request to another computing system via a network.

In some further embodiments, the method 300 includes denying the attempted transaction function when the attempted transaction is received into the SST and presenting, via a display of the SST, an indication of the denial. The SST may then receive input requesting customer assistance following the denial of the attempted transaction function. In some such embodiments, connecting the SST to the customer assistance session includes transmitting data, within the customer assistance session, representative of the attempted transaction function that was denied.

In some embodiments of the method 300, the customer assistance session includes audio and video communication between the SST, the first service provider, and the second service provider. In such embodiments, the SST simultaneously captures communication session video via a camera of the SST and audio via a microphone of the SST. Additionally, the SST provides communication session audio via a speaker of the SST and presents communication session video via at least a portion of a display of the SST.

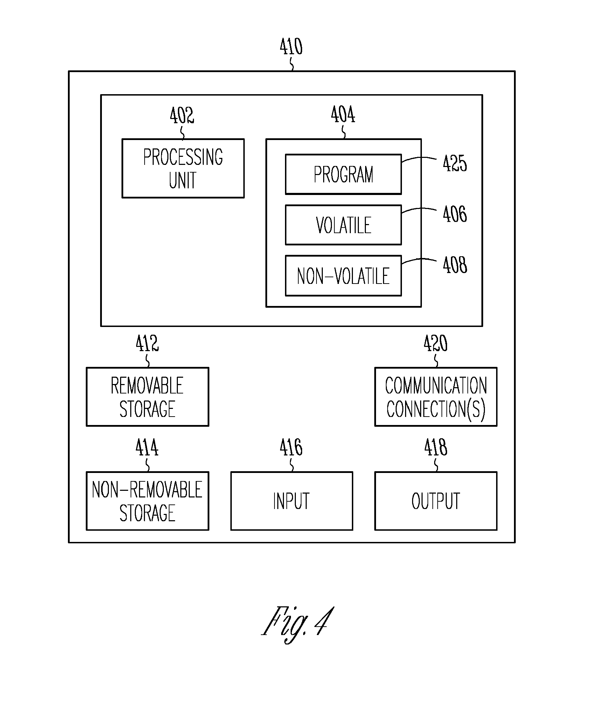

FIG. 4 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 410, may include a processing unit 402, memory 404, removable storage 412, and non-removable storage 414. Although the various data storage elements are illustrated as part of the computer 410, the storage may also or alternatively include cloud-based storage accessible via a network, such as the Internet.

Although the example computing device is illustrated and described as computer 410, the computing device may be in different forms in different embodiments. For example, the computing device may instead be a smartphone, a tablet, or other computing device including the same or similar elements as illustrated and described with regard to FIG. 4. Some such computing devices, e.g., tablets, smartphones, etc., are referred to as mobile devices. The computing device in other embodiments may be a computer deployed with a terminal, such as an SST, such as an ATM, point-of-sale (POS) terminal, customer assistance or informational kiosk, library checkout terminal, and the like. In some such embodiments, the terminal may also include various other devices integrated within or coupled thereto. Such various other devices may include a cash drawer, a bankcard reading device, a signature recording device, a scanner, a receipt printer, a personal identification number (PIN) pad, and a touchscreen display, among others depending upon the type of terminal and the particular embodiment..

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 410 may include or have access to a computing environment that includes input 416, output 418, and a communication connection 420. The input 416 may include one or more of a touchscreen, touchpad, mouse, keyboard, PIN pad, camera, microphone, and other input devices. The computer may operate in a networked environment using a communication connection 420 to connect to one or more remote computers, such as database servers, web servers, and other computing devices. An example remote computer may include a personal computer (PC), server, router, network PC, a peer device or other common network node, or the like. The communication connection 420 may be a network interface device such as one or both of an Ethernet device and a wireless card or circuit that may be connected to a network. The communication connection may also or alternatively include a radio frequency data communication transponder device, such as a Bluetooth (trade mark) enabled device. The network may include one or more of a Local Area Network (LAN), a Wide Area Network (WAN), the Internet, and other networks.

Computer-readable instructions stored on a computer-readable medium are executable by the processing unit 402 of the computer 410. A hard drive (magnetic disk or solid state), flash memory device, CD-ROM, and RAM are some examples of articles including a non-transitory computer-readable medium. For example, various computer programs 425 or apps, such as one or more applications and modules implementing one or more of the methods or other embodiments illustrated and described herein or an app or application that executes on a mobile device or is accessible via a web browser, may be stored on a non-transitory computer-readable medium.

Another embodiment is in the form of a computing device. The computing device of such embodiments may be a server hosting or facilitating joint transaction sessions with regard to transactions being performed on terminal devices. A joint communication session may be conducted to assist a user of a terminal device.

The computing device of such embodiments includes at least one network interface device, at least one processor, and at least one memory device. The at least one memory device stores instructions executable by the at least one processor to connect a first device and second device in a joint transaction session associated with a transaction initiated on the second device. The second device in some such embodiments is an SST and the first device is a computing device of a customer service representative. The instructions stored on the at least one memory device are further executable within the joint transaction session to receive a request for a third device to join the joint transaction session and to connect the third device to the joint transaction session in response to a received acceptance of an invitation to connect. The third device may be computing device another customer service representative that will also provide assistance within the joint communication session.

In one such embodiment, the instructions stored on the at least one memory device are further executable by the at least one processor to retrieve data related to the transaction initiated on the second device, and to transmit the retrieved data to the third device. In one of these embodiments, the instructions are also further executable to receive data from the third device representative of input received on the third device with regard to a transaction activity initiated on the second device and to transmit at least a portion of the data received from the third device to both the first and second devices.

In some of these embodiments, and some other embodiments herein, data related to joint transaction sessions, customer assistance transactions, and the like is recorded and stored on a data storage device. The recorded and stored data provides a record that may be audited, used for training purposes, and for quality assurance. The recorded and stored data may include data representative of a first, second, or third device user that initiated each data processing activity. An example of such a recorded activity is an approval of a banking transaction initiated on the second device where the approval was received from the third device. An identity of the user of the third device may be recorded and stored as well.

It will be readily understood to those skilled in the art that various other changes in the details, material, and arrangements of the parts and method stages which have been described and illustrated to explain the nature of the inventive subject matter may be made without departing from the principles and scope of the inventive subject matter as expressed in the subjoined claims.

## Claims

1. A method comprising:
presenting, on a first device (108 or 109), data with regard to a transaction session initiated on a second device (102, 104, or 106) (step 202),
collaborating in performing the transaction session via the first device (108 or 109) and a network (140); and
transmitting a request for a third device (109 or 108) to collaboratively join the transaction session in response to command input received by either the first (108 or 109) or the second (102, 104, or 106) device (step 204).

2. The method of claim 1, wherein the step of collaborating in performing the transaction session includes transmitting data from the first device (108 or 109) representative of input received on the first device (108 or 109) with regard to a transaction activity initiated on the second device (102, 104, or 106).

3. The method of claim 1 or 2, wherein the transaction session is a banking transaction session and the data with regard to the transaction session includes bank account data and data representative of a banking transaction attempt by a holder of the bank account, the attempted banking transaction needing approval from a user of the third device (109 or 108).

4. The method of any preceding claim, further comprising:
joining the third device (109 or 108) in collaborative performance of the transaction session, the joining including the third device (109 or 108) gaining access to the data with regard to the transaction session including data representative of actions previously performed during the transaction session.

5. The method of claim 4, further comprising:
disconnecting the second device (102, 104, or 106) from the transaction session upon the third device (109 or 108) joining the transaction session.

6. The method of any preceding claim, wherein the step of collaborating in performing the transaction session includes audio or audio and video communication between the first (108 or 109) and second (102, 104, or 106) devices, data of the audio or audio and video communication transmitted and received via the network (140).

7. The method of any preceding claim, wherein the second device (102, 104, or 106) is a customer self-service terminal.

8. The method of any preceding claim, wherein the first device (108 or 109) is a mobile device.

9. A computing device (410) comprising:
a network interface device (420), a processor (402), and a memory (404), the memory (404) storing instructions executable by the processor (402) to:
connect a first device (108 or 109) and second device (102, 104, 106) in a joint transaction session associated with a transaction initiated on the second device (102, 104, 106);
within the joint transaction session:
receive, from the first device (108 or 109) via the network interface device (420), a request for a third device (109 or 108) to join the joint transaction session; and
connect the third device (109 or 108) to the joint transaction session in response to a received acceptance of an invitation to connect transmitted via the network interface device (420).

10. The computing device of claim 9, wherein the instructions stored on the memory (404) are further executable by the processor (402) to:
retrieve data related to the transaction initiated on the second device (102, 104, 106); and
transmit the retrieved data to the third device (109 or 108).

11. The computing device of either claim 9 or 10, wherein the instructions stored on the memory (404) are further executable by the processor (402) to:
receive, via the network interface device (420), data from the third device (109 or 108) representative of input received on the third device (109 or 108) with regard to a transaction activity initiated on the second device (102, 104, 106); and
transmit, via the network interface device (420), at least a portion of the data received from the third device (109 or 108) to both the first (108 or 109) and second (102, 104, 106) devices.

12. The computing device of any of claims 9 to 11, wherein the instructions stored on the memory (404) are further executable by the processor (402) to:
record, on a data storage device, a record of data processing activities performed within the joint transaction session including data representative of a first (108 or 109), second (102, 104, 106), or third (109 or 108) device user that initiated each data processing activity.

13. The computing device of claim 12, wherein a recorded data processing activity is an approval of a banking transaction initiated on the second device (102, 104, 106), the approval being received via the network interface device (420) from the third device (109 or 108).

14. The computing device of any of claims 9 to 13, wherein the instructions stored on the memory (404) are further executable by the processor (402) to:
disconnect the second device (102, 104, 106) from the joint transaction session subsequent to connecting the third device (109 or 108) to the joint transaction session.
